# EUROPÄISCHE PATENTSCHRIFT

(11) **EP 1 135 599 B1**
(45) Veröffentlichungstag und Bekanntmachung des Hinweises auf die Patenterteilung: **01.06.2005**
(21) Anmeldenummer: 00984819.3
(22) Anmeldetag: 28.09.2000
(51) Int. Cl.: F02M 51/06

(54) **BRENNSTOFFEINSPRITZVENTIL**
FUEL INJECTION VALVE
SOUPAPE D'INJECTION DE CARBURANT

(30) Priorität: 29.09.1999 DE 19946602
(43) Veröffentlichungstag der Anmeldung: 26.09.2001
(73) Patentinhaber: ROBERT BOSCH GMBH, 70442 Stuttgart (DE)
(72) Erfinder: STIER, Hubert, 71679 Asperg (DE)
(86) Internationale Anmeldenummer: PCT/DE2000/003422
(87) Internationale Veröffentlichungsnummer: WO 2001/025612

(56) Entgegenhaltungen:
- EP-A- 0 404 336
- WO-A-93/00540
- DE-A- 19 736 548
- DE-A- 19 756 103
- DE-A- 19 808 067
- US-A- 4 844 339
- US-A- 5 088 467

## Beschreibung

### Stand der Technik

Die Erfindung geht aus von einem Brennstoffeinspritzventil nach der Gattung der Ansprüche 1 und 2.

Aus der DE-OS 33 14 899 ist bereits ein elektromagnetisch betätigbares Brennstoffeinspritzventil bekannt, bei welchem zur elektromagnetischen Betätigung ein Anker mit einer elektrisch erregbaren Magnetspule zusammenwirkt und der Hub des Ankers über eine Ventilnadel auf einen Ventilschließkörper übertragen wird. Der Ventilschließkörper wirkt mit einem Ventilsitz zusammen. Der Anker ist an der Ventilnadel nicht starr befestigt, sondern der Anker ist gegenüber der Ventilnadel axial beweglich angeordnet. Eine erste Rückstellfeder beaufschlagt die Ventilnadel in Schließrichtung und hält somit das Brennstoffeinspritzventil im stromlosen, nicht erregten Zustand der Magnetspule geschlossen. Der Anker wird mittels einer zweiten Rückstellfeder in Hubrichtung so beaufschlagt, daß der Anker in der Ruhestellung an einem ersten, an der Ventilnadel vorgesehenen Anschlag anliegt. Bei Erregen der Magnetspule wird der Anker in Hubrichtung angezogen und nimmt über den ersten Anschlag die Ventilnadel mit. Beim Abschalten des die Magnetspule erregenden Stromes wird die Ventilnadel mittels der ersten Rückstellfeder in ihre Schließstellung beschleunigt und führt über den beschriebenen Anschlag den Anker mit. Sobald der Ventilschließkörper auf dem Ventilsitz auftrifft, wird die Schließbewegung der Ventilnadel abrupt beendet. Die Bewegung des mit der Ventilnadel nicht starr verbundenen Ankers setzt sich entgegen der Hubrichtung fort und wird von der zweiten Rückstellfeder aufgefangen, d. h. der Anker schwingt gegen die gegenüber der ersten Rückstellfeder eine wesentlich geringere Federkonstante aufweisende zweite Rückstellfeder durch. Die zweite Rückstellfeder beschleunigt den Anker schließlich erneut in Hubrichtung. Wenn der Anker an dem Anschlag der Ventilnadel auftrifft, kann dies zu einem erneuten kurzzeitigen Abheben des mit der Ventilnadel verbundenen Ventilschließkörpers von dem Ventilsitz und somit zum kurzzeitigen Öffnen des Brennstoffeinspritzventils führen. Die Entprellung ist bei dem aus der DE-OS 33 14 899 bekannten Brennstoffeinspritzventil daher unvollständig. Ferner ist sowohl bei einem konventionellen Brennstoffeinspritzventil, bei welchem der Anker starr mit der Ventilnadel verbunden ist, als auch bei dem aus der DE-OS 33 14 899 bekannten Brennstoffeinspritzventil nachteilig, daß der Öffnungshub der Ventilnadel sofort einsetzt, sobald die von der Magnetspule auf den Anker ausgeübte Magnetkraft die Summe der in Schließrichtung wirkenden Kräfte, d. h. der von der ersten Rückstellfeder ausgeübten Federschließkraft und der hydraulischen Kräfte des unter Druck stehenden Brennstoffs, übersteigt. Dies ist insofern nachteilig, als beim Einschalten des die Magnetspule erregenden Stromes die Magnetkraft aufgrund der Selbstinduktion der Magnetspule und auftretender Wirbelströme noch nicht ihren endgültigen Wert erreicht. Die Ventilnadel und der Ventilschließkörper werden daher zu Beginn des Öffnungshubs von einer verminderten Kraft beschleunigt. Dies führt zu einer nicht für alle Anwendungsfälle befriedigenden Öffnungszeit.

In der US-PS 5,299,776 ist in diesem Zusammenhang vorgeschlagen worden, den Anker nicht starr mit der Ventilnadel zu verbinden, sondern dem Anker ein gewisses axiales Bewegungsspiel an der Ventilnadel zu ermöglichen. Die axiale Lage des Ankers in der Ruhestellung des Brennstoffeinspritzventils ist jedoch bei dieser Ausgestaltung nicht definiert und somit ist bei dem aus dieser Druckschrift bekannten Brennstoffeinspritzventil die Ansprechzeit beim Einschalten des Erregerstroms unbestimmt.

### Vorteile der Erfindung

Das erfindungsgemäße Brennstoffeinspritzventil mit den kennzeichnenden Merkmalen des Anspruchs 1 oder 2 hat demgegenüber den Vorteil, daß das Brennstoffeinspritzventil in befriedigender Weise entprellt ist und außerdem eine äußerst geringe Öffnungszeit aufweist. Aufgrund des ummittelbaren Anschlags an dem Anschlußteil entfällt eine Einstell- oder Führungsscheibe. Der vergrößerte Führungsdurchmesser bewirkt bessere Führungseigenschaften, d.h. die Ventilnadel ist weniger empfindlich gegen Verkippen oder Verklemmen. Dadurch, daß die Führung näher am Anker ist, werden die Momente reduziert.

Dadurch, daß die zweite Rückstellfeder den Anker in dem Ruhezustand des Brennstoffeinspritzventils nicht an dem an der Ventilnadel vorgesehenen ersten Anschlag, sondern an einem von dem ersten Anschlag der Ventilnadel beabstandeten, stationären zweiten Anschlag in Anlage hält, wird beim Schließen des Brennstoffeinspritzventils erreicht, daß der Anker durch die zweite Rückstellfeder nicht wieder in Hubrichtung beschleunigt wird. Beim Schließen des Brennstoffeinspritzventils wird zunächst die Bewegung der Ventilnadel abrupt beendet, wenn der Ventilschließkörper infolge der Beschleunigung durch die erste Rückstellfeder an dem Ventilsitz zur Anlage kommt. Die Bewegung des Ankers setzt sich auch bei dem erfindungsgemäßen Brennstoffeinspritzventil in Schließrichtung, d. h. entgegen der Hubrichtung, fort, bis der Anker den zweiten Anschlag erreicht. Wenn der Anker von dem zweiten Anschlag zurückprallt, wird er jedoch von der zweiten Rückstellfeder wieder entgegen der Hubrichtung beschleunigt, und es wird verhindert, daß der Anker den ersten Anschlag an der Ventilnadel wieder erreicht und somit die Ventilnadel in Öffnungsrichtung mitführt. Durch die zweite Rückstellfeder wird der Anker von dem an der Ventilnadel vorgesehenen ersten Anschlag so lange auf Abstand gehalten, bis der Anker durch die Magnetspule infolge des nächsten die Magnetspule erregenden Stromimpulses wieder in Hubrichtung beschleunigt wird.

Ein weiterer Vorteil des Brennstoffeinspritzventils liegt darin, daß der Anker vor dem Erreichen des an der Ventilnadel vorgesehenen ersten Anschlags, d. h. vor dem Mitführen der Ventilnadel, zunächst vorbeschleunigt wird. Dadurch erreicht der Anker bereits vor dem Mitführen der Ventilnadel einen Impuls, den er auf die Ventilnadel überträgt. Im Vergleich zu einem Brennstoffeinspritzventil, bei welchem der Anker starr mit der Ventilnadel verbunden ist oder einem Brennstoffeinspritzventil, bei welchem der Anker zwar gegenüber der Ventilnadel beweglich ist, in der Ruhestellung jedoch an dem Anschlag der Ventilnadel anliegt, wird eine wesentlich kürzere Öffnungszeit und somit eine genauere Zumessung des Brennstoffs erreicht. Ein weiterer, die Öffnungszeit verkürzender Effekt besteht darin, daß die auf den Anker ausgeübte Magnetkraft beim Einschalten des die Magnetspule erregenden Stromimpulses zunächst aufgrund der Selbstinduktion der Magnetspule und durch von der Magnetspule erregte Wirbelströme vermindert ist. Bei geeigneter Dimensionierung des Abstandes zwischen dem zweiten Anschlag, an welchem der Anker in seiner Ruhestellung positioniert ist, und dem ersten, der Mitführung der Ventilnadel dienenden Anschlag, kann daher erreicht werden, daß beim Anschlagen des Ankers an dem ersten Anschlag der Ventilnadel bereits soviel Zeit vergangen ist, daß die Magnetkraft ihren endgültigen konstanten Wert erreicht hat. Durch die vorgeschaltete Flugzeit des Ankers wird daher eine Zeitverzögerung erreicht, die die nachfolgende Öffnungszeit des Brennstoffeinspritzventils signifikant verkürzt.

Durch die in den Unteransprüchen aufgeführten Maßnahmen sind vorteilhafte Weiterbildungen und Verbesserungen des in den Ansprüchen 1 und 2 angegebenen Brennstoffeinspritzventils möglich.

In dem als Ventilsitzträger ausgeführten Anschlußteil kann sowohl eine Ankerführung als auch der zweite Anschlag integriert sein. Dabei kann in einem ersten Umfangsbereich der Ventilsitzträger mit der Ankerführung jedoch ohne den zweiten Anschlag und in einem zweiten Umfangsbereich mit dem zweiten Anschlag jedoch ohne die Ankerführung ausgebildet sein. Durch die funktionale Trennung von Anschlag und Ankerführung ergeben sich geringere Anforderungen an die Fertigungsgenauigkeit.

Die magnetische Drosselstelle ist vorzugsweise im Bereich zwischen dem zweiten Anschlag und einem Ventilnadelschaft der Ventilnadel angeordnet, um einen magnetischen Kurzschluß zu verhindern. Die magnetische Drosselstelle kann entweder an dem Ventilsitzträger oder an dem Anker angeordnet sein. Bei Anordnung an dem Anker befindet sich die magnetische Drosselstelle vorzugsweise am Umfang eines zur Ventilnadel hin ausgerichteten Abschnitts.

### Zeichnung

Ausführungsbeispiele der Erfindung sind in der Zeichnung vereinfacht dargestellt und in der nachfolgenden Beschreibung näher erläutert. Es zeigen:
- Fig. 1: ein Brennstoffeinspritzventil gemäß dem Stand der Technik in einer geschnittenen Darstellung;
- Fig. 2: eine ausschnittsweise, geschnittene Darstellung eines mit dem der Erfindung zugrundeliegenden kinematischen Grundprinzip ausgestatteten Brennstoffeinspritzventils, jedoch ohne alle erfindungsgemäßen Merkmale;
- Fig. 3: eine vergrößerte Darstellung des Ausschnitts III in Fig. 2;
- Fig. 4: eine ausschnittsweise, geschnittene Darstellung eines ersten Ausführungsbeispiels eines erfindungsgemäßen Brennstoffeinspritzventils;
- Fig. 5: den Ausschnitt V in Fig. 4;
- Fig. 6: eine ausschnittsweise, geschnittene Darstellung eines Details eines zweiten Ausführungsbeispiels eines erfindungsgemäßen Brennstoffeinspritzventils; und
- Fig. 7: eine ausschnittsweise, geschnitten Darstellung eines Details eines dritten nicht erfindungsgemäßen und vierten Ausführungsbeispiels eines erfindungsgemäßen Brennstoffeinspritzventils.

### Beschreibung der Ausführungsbeispiele

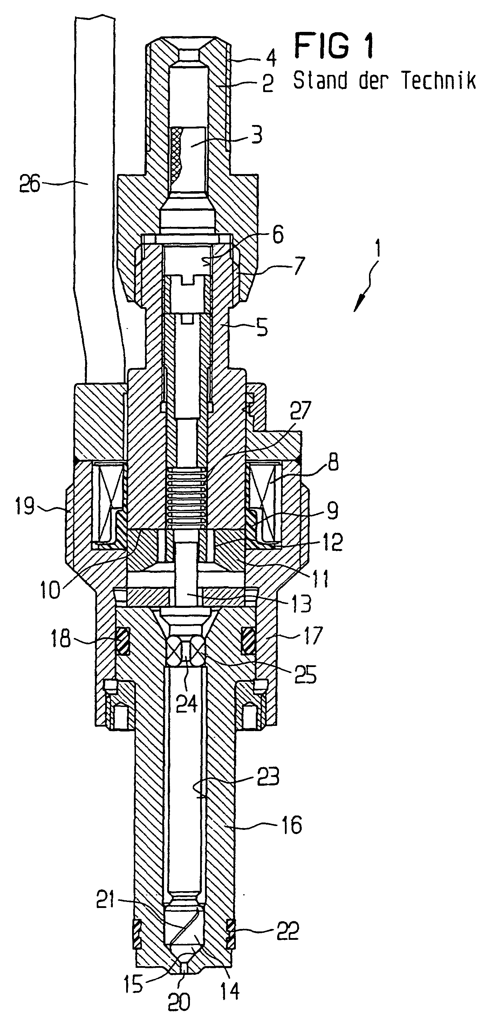

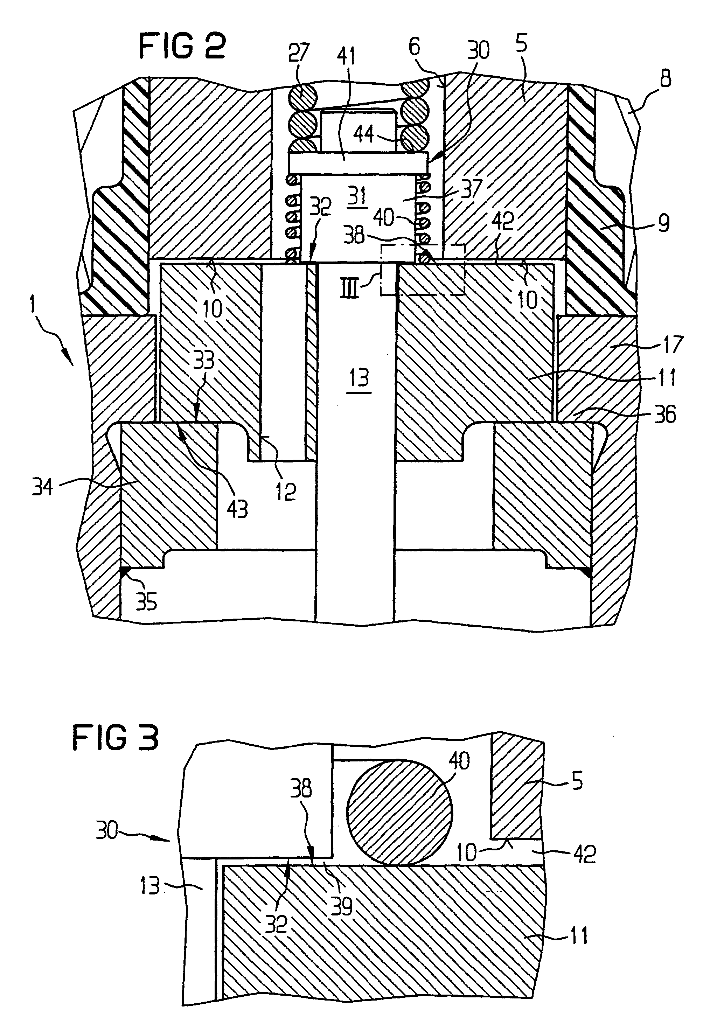

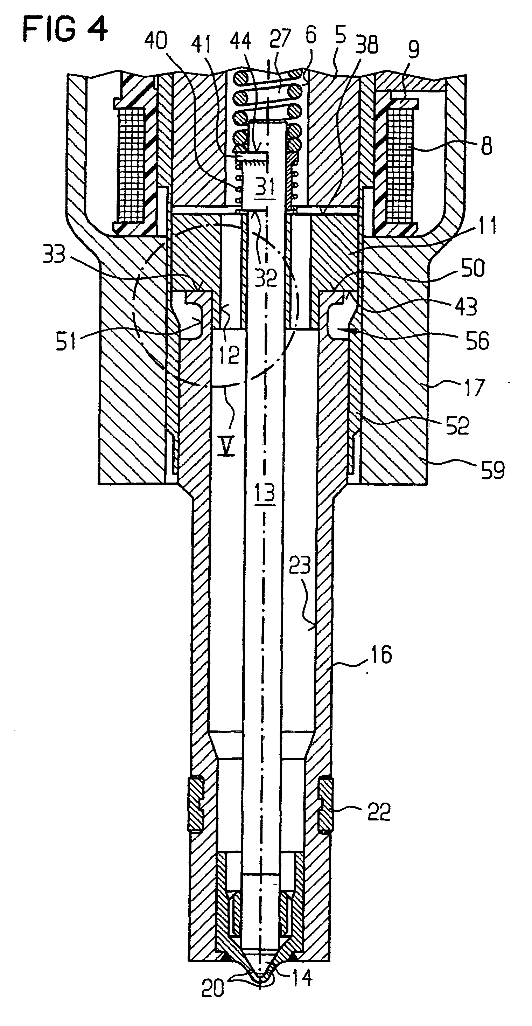

Bevor anhand der Fig. 4, 5, 6 und 7 drei Ausführungsbeispiele eines mit der Erfindung ausgestatteten Brennstoffeinspritzventils näher beschrieben werden, soll zum besseren Verständnis zunächst anhand von Fig. 1 ein bereits bekanntes Brennstoffeinspritzventil bezüglich seiner wesentlichen Bauteile und anschließend anhand der Fig. 2 und 3 das der Erfindung zugrundeliegende, kinematische Grundprinzip kurz erläutert werden.

Das allgemein mit dem Bezugszeichen 1 versehene Brennstoffeinspritzventil weist einen Brennstoffzulaufstutzen 2 auf, welcher über ein Gewinde 4 mit einer Brennstoffleitung in an sich bekannter Weise verbindbar ist. Das Brennstoffeinspritzventil 1 ist in der Form eines Einspritzventils für Brennstoffeinspritzanlagen von gemischverdichteten, fremdgezündeten Brennkraftmaschinen ausgeführt. Das Brennstoffeinspritzventil 1 eignet sich besonders zum direkten Einspritzen von Brennstoff in einen nicht dargestellten Brennraum einer Brennkraftmaschine. Der Brennstoff gelangt über ein Brennstoffilter 3 zu einer in einem Kern 5 ausgebildeten Längsbohrung 6. Der Kern 5 weist einen äußeren Gewindeabschnitt 7 auf, der mit dem Brennstoffeinlaßstutzen 2 verschraubt ist.

Der Kern 5 ist an seinem stromabwärtigen Ende 10 von einer Magnetspule 8 umgeben, die auf einen Spulenträger 9 gewickelt ist. Stromabwärts des stromabwärtigen Endes 10 des Kerns 5 befindet sich ein durch einen geringfügigen Spalt von dem Ende 10 des Kerns 5 beabstandeter Anker 11. Der Anker 11 weist Bohrungen 12 für den Durchtritt des Brennstoffs auf. Der Anker 11 ist ferner mit einer Ventilnadel 13 z. B. durch Schweißen. starr verbunden. An dem dem Anker 11 gegenüberliegenden Ende weist die Ventilnadel 13 einen Ventilschließkörper 14 auf, der mit einem an einem Ventilsitzträger 16 ausgebildeten Ventilsitz 15 zusammenwirkt. Der Ventilsitzträger 16 ist in dem in Fig. 1 dargestellten Beispiel in einen Gehäusekörper 17 eingesetzt und mittels eines Dichtrings 18 abgedichtet.

Der Gehäusekörper 17 ist mittels eines Gewindes 19 z.B. in einen nicht dargestellten Zylinderkopf einer Brennkraftmaschine einschraubbar. Beim Öffnen des Brennstoffeinspritzventils 1 wird Brennstoff über wenigstens eine am stromabwärtigen Ende des Ventilsitzträgers 16 ausgebildete Abspritzöffnung 20 in den ebenfalls nicht dargestellten Brennraum der Brennkraftmaschine eingespritzt. Zur besseren Verteilung des Brennstoffs dienen z. B. mehrere umfänglich eingebrachte Drallnuten 21 an dem Ventilschließkörper 14. Zur Abdichtung des Ventilsitzträgers 16 in der Bohrung des Zylinderkopfes dient eine Dichtung 22. Die Ventilnadel 13 ist in einer Längsbohrung 23 des Ventilsitzträgers 16 an Führungsflächen 24 geführt. Zwischen den Führungsflächen 24 befinden sich Abflachungen 25, um den ungehinderten Durchfluß des Brennstoffs zu ermöglichen.

Zum Öffnen des Brennstoffeinspritzventils 1 wird die Magnetspule 8 durch einen elektrischen Erregerstrom erregt, der über ein elektrisches Verbindungskabel 26 zugeführt wird.

In dem Ruhezustand des Brennstoffeinspritzventils 1 wird der Anker 11 über eine erste Rückstellfeder 27 entgegen seiner Hubrichtung so beaufschlagt, daß der Ventilschließkörper 14 an dem Ventilsitz 15 in dichtender Anlage gehalten wird. Bei Erregung der Magnetspule 8 wird der Anker 11 in Hubrichtung an den Kern 5 gezogen, wobei der Hub durch den in der Ruhestellung zwischen dem Kern 5 und dem Anker 11 befindlichen Spalt vorgegeben ist. Die starr mit dem Anker 11 verbundene Ventilnadel 13 und der Ventilschließkörper 14 werden in der Hubrichtung mitgeführt, so daß der Ventilschließkörper 14 die Abspritzöffnung 20 freigibt.

Beim Abschalten des Erregerstroms werden der Anker 11, die starr mit dem Anker 11 verbundene Ventilnadel 13 und der Ventilschließkörper 14 durch die erste Rückstellfeder 27 in Schließrichtung entgegen der Hubrichtung beschleunigt. Wenn der Ventilschließkörper 14 auf den Ventilsitz 15 aufprallt, kann es aufgrund der Elastizität der Ventilnadel 13 und der Masse des starr mit der Ventilnadel 13 verbundenen Ankers 11 zu einem Zurückprallen des Ventilschließkörpers 14 von dem Ventilsitz 15 kommen. Dies ist höchst unerwünscht, da dieser Effekt zu einem erneuten kurzzeitigen Öffnen des Brennstoffeinspritzventils 1 führt und sowohl die Zumeßzeit als auch die Zumeßmenge verfälscht werden.

Beim Öffnen des in Fig. 1 dargestellten, bekannten Brennstoffeinspritzventils 1 besteht der Nachteil, daß die von der Magnetspule 8 ausgeübte Magnetkraft unmittelbar nach dem Einschalten des Erregerstroms den Anker 11 und die mit dem Anker 11 starr verbundene Ventilnadel 13 beaufschlagt. Dies ist insofern ungünstig, als die von der Magnetspule 8 ausgeübte Magnetkraft unmittelbar nach Einschalten des Erregerstroms aufgrund der Selbstinduktion der Magnetspule 8 und von der Magnetspule 8 induzierter Wirbelströme nicht sofort ihren endgültigen Wert erreicht. Auf den Anker 11 wird daher in der Anfangsphase des Öffnungshubs zunächst eine verminderte Magnetkraft ausgeübt, was für manche Anwendungsfälle zu einer unbefriedigend langen Öffnungszeit führt.

Zur Überwindung dieser Nachteile dient die in Fig. 2 und 3 gezeigte Ausgestaltung. Fig. 2 zeigt einen Ausschnitt in einer vergrößerten, geschnittenen Darstellung. Dabei sind in einer vergrößerten Darstellung nur diejenigen Komponenten gezeigt, die in bezug auf die Erfindung von wesentlicher Bedeutung sind. Die Ausgestaltung der übrigen Komponenten kann mit einem bekannten Brennstoffeinspritzventil 1, insbesondere mit dem in Fig. 1 dargestellten Brennstoffeinspritzventil 1, identisch sein. Zum besseren Verständnis sind bereits anhand von Fig. 1 beschriebene Elemente in Fig. 2 daher mit übereinstimmenden Bezugszeichen gekennzeichnet. In Fig. 3 ist der Ausschnitt III in Fig. 2 in einer gegenüber Fig. 2 nochmals wesentlich vergrößerten Darstellung wiedergegeben.

An dem dem Ventilschließkörper 14 gegenüberliegenden Ende weist die Ventilnadel 13 einen Flansch 30 auf, der im dargestellten Beispiel die Form eines Stufenzylinders 37 hat. Der Anker 11 ist mit der Ventilnadel 13 nicht starr verbunden, sondern gegenüber der Ventilnadel 13 innerhalb vorgegebener Grenzen axial verschiebbar. Die Ventilnadel 13 bzw. im dargestellten Beispiel der Flansch 30 der Ventilnadel 13 weist einen ersten Anschlag 32 für den Anker 11 auf. Der erste Anschlag 32 ist im dargestellten Beispiel an einer ersten Stufe 31 des als Stufenzylinder 37 ausgebildeten Flansches 30 vorgesehen. Ein zweiter Anschlag 33 ist an einer im Beispiel ringförmig oder teilringförmig ausgebildeten gehäusefesten, stationären Einstellscheibe 34 vorgesehen, die in den Gehäusekörper 17 einsetzbar ist. Die Arretierung der Einstellscheibe 34 kann z. B. durch Verklemmen erfolgen. Ferner ist es möglich, die Einstellscheibe 34 an dem Gehäusekörper 17 mittels einer Schweißnaht 35 zu sichern. Zur axialen Positionierung der Einstellscheibe 34 kann der Gehäusekörper 17 einen gestuften Vorsprung 36 aufweisen. Die Einstellscheibe 34 wird dabei beim Einführen in den Gehäusekörper 17 so weit eingeschoben, bis sie an dem Vorsprung 36 des Gehäusekörpers 17 anliegt.

In den Fig. 2 und 3 ist die Ruhestellung des Brennstoffeinspritzventils 1 ohne elektrische Erregung der Magnetspule 8 dargestellt. Wie aus diesen Fig. erkennbar, ist der Abstand zwischen dem ersten Anschlag 32 an dem Flansch 30 der Ventilnadel 13 und dem zweiten, stationären Anschlag 33 so bemessen, daß sich im Ruhezustand des Brennstoffeinspritzventils 1 ein Spalt 39 zwischen dem ersten Anschlag 32 und der dem ersten Anschlag 32 gegenüberliegenden Stirnfläche 38 des Ankers 11 ergibt. Der Anker 11 wird in dem dargestellten Ruhezustand durch eine zweite Rückstellfeder 40 an dem zweiten Anschlag 33 der stationären Einstellscheibe 34 in Anlage gehalten. Die zweite Rückstellfeder 40 ist zwischen einer zweiten Stufe 41 des als Stufenzylinder 37 ausgebildeten Flansches 30 und der dem ersten Anschlag 32 gegenüberliegenden Stirnfläche 38 des Ankers 11 eingespannt. An der zweiten Stufe 41 des Stufenzylinders 37 stützt sich gegenüberliegend an einer Stirnfläche 44 auch die erste Rückstellfeder 27 ab, die ebenfalls über den Flansch 30 an der Ventilnadel 13 angreift und die Ventilnadel 13 in Schließrichtung vorspannt. Wie sowohl aus Fig. 2 als auch aus Fig. 3 erkennbar, befindet sich zwischen dem stromabwärtigen Ende 10 des Kerns 5 und der oberen Stirnfläche 38 des Ankers 11 ein zweiter Spalt 42, der in axialer Richtung größer bemessen ist als der zwischen dem ersten Anschlag 32 und der Stirnfläche 38 des Ankers 11 vorgesehene erste Spalt 39.

Die Funktionsweise des Brennstoffeinspritzventils ist folgende:
Beim Öffnen des Brennstoffeinspritzventils nach Erregen der Magnetspule 8 wird zunächst nur der Anker 11 in Hubrichtung gegen die zweite Rückstellfeder 40 beschleunigt, zunächst ohne daß die Ventilnadel 13 und der mit der Ventilnadel 13 verbundene Ventilschließkörper 14 mitgeführt werden. Der Anker 11 trifft aufgrund der Vorbeschleunigung mit einem erheblichen Impuls auf den ersten Anschlag 32 auf und führt die Ventilnadel 13 und den Ventilschließkörper 14 mit. Aufgrund der Vorbeschleunigung und des Impulses des Ankers 11 wird eine relativ zügige Öffnungsbewegung nach dem Auftreffen des Ankers 11 auf den ersten Anschlag 32 erzielt. Ferner hat die Flugzeit des Ankers 11 vor dem Auftreffen auf den ersten Anschlag 32 den Vorteil, daß bei geeigneter Dimensionierung des Abstands zwischen dem ersten Anschlag 32 und dem zweiten Anschlag 33 eine so lange Verzögerungszeit erreicht wird, daß zwischenzeitlich die Magnetkraft ihre volle Intensität erreicht hat. Wie bereits beschrieben, ist in der Anfangsphase der Erregung der Magnetspule 8 die von der Magnetspule 8 erzeugte Magnetkraft aufgrund der Selbstinduktion der Magnetspule 8 und induzierter Wirbelströme vermindert. Die Beschleunigung der Ventilnadel 13 und des Ventilschließkörper 14 erfolgt dann mit voller, nicht reduzierter Magnetkraft, was ebenfalls zu einer kurzen Öffnungszeit beiträgt. Nach dem Erreichen des ersten Anschlags 32 wird der Anker 11 zusammen mit der Ventilnadel 13 und dem Ventilschließkörper 14 in Hubrichtung so lange beschleunigt, bis die Stirnfläche 38 des Ankers 11 die stromabwärtige Stirnfläche des Endes 10 des Kerns 5 erreicht. Der erste Spalt 39 bestimmt daher die Vorbeschleunigung des Ankers 11, während der zweite Spalt 42 den Öffnungshub des Brennstoffeinspritzventils 1 festlegt.

Beim Schließen des Brennstoffeinspritzventils 1 bewegen sich zunächst der Anker 11, die Ventilnadel 13 und der Ventilschließkörper 14 synchron in Schließrichtung. Sobald der Ventilschließkörper 14 den Ventilsitz 15 erreicht, wird die Bewegung des Ventilschließkörpers 14 und der Ventilnadel 13 abrupt beendet, während sich der Anker 11 weiterhin in Schließrichtung bewegt, bis der Anker 11 an dem zweiten Anschlag 33 auftrifft. Selbst wenn der Anker 11 von dem zweiten Anschlag 33 zurückprallt, hat dies keinen negativen Einfluß auf das Öffnungsverhalten des Brennstoffeinspritzventils 1, da durch die zweite Rückstellfeder 40 verhindert wird, daß der Anker 11 den ersten Anschlag 32 nochmals erreicht. Ein erneutes Mitführen der Ventilnadel 13 und des Ventilschließkörpers 14 wird daher verhindert. Der Anker 11 wird schließlich durch die zweite Rückstellfeder 40 an dem zweiten Anschlag 33 in Anlage gehalten, bis ein neuer Stromimpuls eine erneute Öffnung des Brennstoffeinspritzventils 1 durch Erregung der Magnetspule 8 herbeiführt.

Durch diese Maßnahme wird daher sowohl eine wirkungsvolle Entprellung als auch eine relativ kurze Öffnungszeit des Brennstoffeinspritzventils 1 erreicht.

Fig. 4 zeigt ein erstes Ausführungsbeispiel eines erfindungsgemäßen Brennstoffeinspritzventils in einer ausschnittsweisen, geschnittenen Darstellung. Auch hier sind bereits beschriebene Elemente mit übereinstimmenden Bezugszeichen versehen.

Im Gegensatz zu der anhand der Fig. 2 und 3 beschriebenen Ausführung ist bei dem erfindungsgemäßen Ausführungsbeispiel keine Einstellscheibe 34 vorgesehen. Statt dessen ist der zweite Anschlag 33 unmittelbar an der zulaufseitigen Stirnfläche 50 des als Ventilsitzträger 16 ausgeführten Anschlußteils ausgebildet. In dem in Fig. 4 dargestellten Ausführungsbeispiel besteht der Ventilsitzträger 16 aus einem magnetischen, insbesondere ferritischen Material. Dabei muß vermieden werden, daß ein wesentlicher magnetischer Fluß von dem Anker 11 in den Ventilsitzträger 16 und dann weiter mittelbar in den den magnetischen Kreislauf als Außenpol 59 schließenden Gehäusekörper 17 fließt, da dies eine Gegenkraft auf den Anker 11 in Gegenöffnungsrichtung bewirkt und somit die magnetische Öffnungskraft, die auf den Anker 11 effektiv ausgeübt wird, mindert. Es muß vielmehr dafür Sorge getragen werden, daß der magnetische Hauptfluß unmittelbar von dem Anker 11 in den Gehäusekörper 17 unter Umgehung des Ventilsitzträgers 16 fließt. Hierzu ist unmittelbar in Brennstoffflußrichtung unterhalb der den zweiten Anschlag 33 bildenden Stirnfläche 50 an dem Ventilsitzträger 16 eine magnetische Drosselstelle 56 vorgesehen, die durch eine Ringnut 51 gebildet ist. Durch die Materialverengung des Ventilsitzträgers 16 im Bereich der Drosselstelle 56 wird der magnetische Fluß an dieser Stelle abgeschwächt, so daß der Hauptfluß unmittelbar von dem Anker 11 in den Gehäusekörper 17 bzw. in umgekehrte Richtung übertritt. Zwischen dem Gehäusekörper 17 und dem Anker 11 und dem Ventilsitzträger 16 befindet sich eine Umhüllung 52.

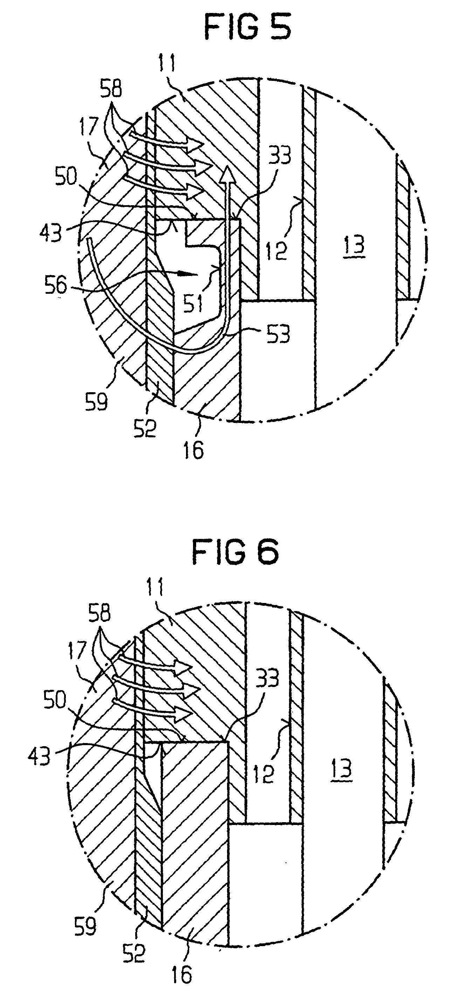

Fig. 5 zeigt den in Fig. 4 mit V gekennzeichnet Ausschnitt und verdeutlicht den vorstehend beschriebenen Sachverhalt. Erkennbar ist, daß der magnetische Nebenfluß 53, der von dem als magnetischen Außenpol 59 wirkenden Gehäusekörper 17 über den Ventilsitzträger 16 zu dem Anker 11 verläuft, gegenüber dem magnetischen Hauptfluß 58, der von dem Gehäusekörper 17 direkt zu dem Anker 11 verläuft, wesentlich abgeschwächt ist.

Fig. 6 zeigt eine auszugsweise, geschnittene Darstellung eines Details eines zweiten Ausführungsbeispiels eines erfindungsgemäßen Brennstoffeinspritzventils 1.

Das in Fig. 6 dargestellte Ausführungsbeispiel unterscheidet sich von dem bereits anhand der Fig. 4 und 5 beschriebenen Ausführungsbeipiel dadurch, daß der Ventilsitzträger 16 aus einem nichtmagnetischen Material, beispielsweise einem Keramikmaterial oder einem Kunststoffmaterial, ausgebildet ist. Da der Ventilsitzträger 16 bei diesem Ausführungsbeispiel aus einem nichtmagnetischen Material besteht, erfolgt auch kein magnetischer Nebenfluß über den Ventilsitzträger 16, so daß die Drosselstelle 56 entfallen kann.

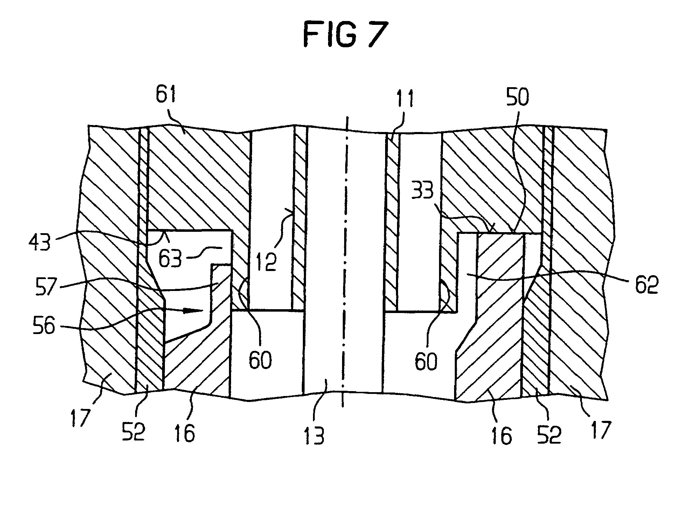

Fig. 7 zeigt ein Detail eines dritten und eines vierten Ausführungsbeispiels eines erfindungsgemäßen Brennstoffeinspritzventils 1 ebenfalls in einer ausschnittsweisen geschnittenen Darstellung. Dabei ist in der linken Hälfte von Fig. 7 ein drittes Ausführungsbeispiel und in der rechten Hälfte von Fig. 7 ein viertes Ausführungsbeispiel dargestellt.

Bei dem in der linken Hälfte von Fig. 7 dargestellten dritten nicht erfindungsgemäßen Ausführungsbeispiel übernimmt der Ventilsitzträger 16 nur die Funktion der Führung des Ankers 11, nicht jedoch die Funktion des Ankeranschlags. Dazu ist an dem Ventilsitzträger 16 eine Ankerführung 57 vorgesehen, die mit einem Ankerschaft 60 zusammenwirkt, welcher sich in Abspritzrichtung von einem Ankerhauptkörper 61 axial erstreckt. Die Ankerführung 57 ist mit verminderter Materialstärke ausgeführt, so daß sich in diesem Bereich eine magnetische Drosselstelle 56 ergibt. Da der Anker 11 nicht an dem Ventilsitzträger 16 sondern an einem anderen, in Fig. 7 nicht dargestellten Bauteil anschlägt, besteht ein axialer Spalt 63 zwischen der Ankerführung 57 und der an dem Ankerhauptkörper 61 ausgebildeten Stirnfläche 43 des Ankers 11. Dieser axiale Spalt 63 bewirkt eine zusätzliche magnetische Isolation des Ankers 11 von dem Ventilsitzträger 16, welcher bei diesem Ausführungsbeispiel aus einem magnetischen bzw. ferritischen Material ausgebildet sein kann.

Bei dem in der rechten Hälfte von Fig. 7 dargestellten vierten Ausführungsbeispiel eines erfindungsgemäßen Brennstoffeinspritzventils 1 schlägt der Anker 11 zwar an der zulaufseitigen Stirnfläche 50 des Ventilsitzträgers 16 an. Bei diesem Ausführungsbeispiel übernimmt der Ventilsitzträger 16 jedoch nicht die Funktion der Führung des Ankers 11, sondern nur des Anschlags. Der Anker 11 kann beispielsweise in der Umhüllung 52 geführt sein. Zwischen dem Ventilsitzträger 16 und dem sich von dem Ankerhauptkörper 61 erstreckenden Ankerschaft 60 ist ein radialer Spalt 62 ausgebildet. Da bei diesem Ausführungsbeispiel keine magnetische Drosselstelle 56 vorhanden ist, ist der Ventilsitzträger 16 zweckmäßigerweise aus einem nicht magnetischen Material, beispielsweise einem keramischen Material, ausgebildet.

## Patentansprüche

1. Brennstoffeinspritzventil (1) für Brennstoffeinspritzanlagen von Brennkraftmaschinen, insbesondere zum direkten Einspritzen von Brennstoff in den Brennraum einer Brennkraftmaschine, mit einer Magnetspule (8), einem durch die Magnetspule (8) in einer Hubrichtung gegen eine erste Rückstellfeder (27) beaufschlagbaren Anker (11), einer mit einem Ventilschließkörper (14) in Verbindung stehenden Ventilnadel (13), die einen ersten Anschlag (32) für den Anker (11) aufweist, wobei der Anker (11) zusätzlich durch eine zweite Rückstellfeder (40) beaufschlagt ist, und mit einem Anschlußteil (16), das einen mit dem Ventilschließkörper (14) zusammenwirkenden Ventilsitz (15) trägt,
**dadurch gekennzeichnet,**
**daß** ein stationärer zweiter Anschlag (33) für den Anker (11) vorgesehen ist,
**daß** die zweite Rückstellfeder (40) den Anker (11) entgegen der Hubrichtung beaufschlagt und in einer Ruhestellung bei nichterregter Magnetspule (8) den Anker (11) an dem zweiten Anschlag (33) so in Anlage hält, daß der Anker (11) von dem an der Ventilnadel (13) ausgebildeten ersten Anschlag (32) um einen vorgegebenen Abstand beabstandet ist, wobei der zweite Anschlag (33) an dem Anschlußteil (16) ausgebildet ist und wobei das Anschlußteil (16) aus einem magnetischen Material besteht und,
**daß** in der Nähe des zweiten Anschlags (33) an dem Anschlußteil (16) und/oder dem Anker (11) eine magnetische Drosselstelle (56) vorgesehen ist.

2. Brennstoffeinspritzventil (1) für Brennstoffeinspritzanlagen von Brennkraftmschinen, insbesondere zum direkten Einspritzen von Brennstoff in den Brennraum einer Brennkraftamschine, mit einer Magnetspule (8), einem durch die Magnetspule (8) in einer Hubrichtung gegen eine erste Rückstellfeder (27) beaufschlagbaren Anker (11), einer mit einem Ventilschließkörper (14) in Verbindung stehenden Ventilnadel (13), die einen ersten Anschlag (32) für den Anker (11) aufweist, wobei der Anker (11) zusätzlich durch eine zweite Rückstellfeder (40) beaufschlagt ist, und mit einem Anschlußteil (16), das einen mit dem Ventilschließkörper (14) zusammenwirkenden Ventilsitz (15) trägt,
**dadurch gekennzeichnet,**
**daß** ein stationärer zweiter Anschlag (33) für den Anker (11) vorgesehen ist, und
**daß** die zweite Rückstellfeder (40) den Anker (11) entgegen der Hubrichtung beaufschlagt und in einer Ruhestellung bei nichterregter Magnetspule (8) den Anker (11) an dem zweiten Anschlag (33) so in Anlage hält, daß der Anker (11) von dem an der Ventilnadel (13) ausgebildeten ersten Anschlag (32) um einen vorgegebenen Abstand beabstandet ist, wobei der zweite Anschlag (33) an dem Anschlußteil (16) ausgebildet ist und das Anschlußteil (16) aus einem nichtmagnetischen Material besteht.

3. Brennstoffeinspritzventil nach Anspruch 1 oder 2,
**dadurch gekennzeichnet,**
**daß** sowohl eine Ankerführung (57) als auch der zweite Anschlag (33) im Anschlußteil (16) integriert sind.

4. Brennstoffeinspritzventil nach Anspruch 3,
**dadurch gekennzeichnet,**
**daß** der Anker (11) so gestaltet ist, daß er sowohl mit einem Außenpol (59) als auch mit der Ankerführung (57) und dem zweiten Anschlag (33) zusammenwirkt.

5. Brennstoffeinspritzventil nach Anspruch 1,
**dadurch gekennzeichnet,**
**daß** die magnetische Drosselstelle (56) am Umfang eines zur Ventilnadel (13) hin ausgerichteten Abschnitts des Ankers (11) angeordnet ist.

6. Brennstoffeinspritzventil nach einem der Ansprüche 1 bis 5,
**dadurch gekennzeichnet,**
**daß** zwischen dem Anschlußteil (16) und einem Außenpol (59) eine Umhüllung (52) aus einem nichtmagnetischen Material angeordnet ist.

## Claims

1. Fuel injection valve (1) for fuel injection systems of internal combustion engines, in particular for the direct injection of fuel into the combustion space of an internal combustion engine, with a magnet coil (8), with an armature (11) capable of being acted upon by the magnet coil (8) in a lifting direction counter to a first return spring (27), with a valve needle (13) which is connected to a valve-closing body (14) and which has a first stop (32) for the armature (11), the armature (11) being additionally acted upon by a second return spring (40), and with a connection part (16) which carries a valve seat (15) cooperating with the valve-closing body (14), **characterized in that** a stationary second stop (33) is provided for the armature (11), **in that** the second return spring (40) acts upon the armature (11) counter to the lifting direction and in a position of rest, with the magnet coil (8) not excited, holds the armature (11) in bearing contact against the second stop (33) in such a way that the armature (11) is spaced apart by a predetermined spacing from the first stop (32) formed on the valve needle (13), the second stop (33) being formed on the connection part (16), and the connection part (16) consisting of a magnetic material, and **in that** a magnetic throttle point (56) is provided in the vicinity of the second stop (33) on the connection part (16) and/or the armature (11).

2. Fuel injection valve (1) for fuel injection systems of internal combustion engines, in particular for the direct injection of fuel into the combustion space of an internal combustion engine, with a magnet coil (8), with an armature (11) capable of being acted upon by the magnet coil (8) in a lifting direction counter to a first return spring (27), with a valve needle (13) which is connected to a valve-closing body (14) and which has a first stop (32) for the armature (11), the armature (11) being additionally acted upon by a second return spring (40), and with a connection part (16) which carries a valve seat (15) cooperating with the valve-closing body (14), **characterized in that** a stationary second stop (33) is provided for the armature (11), and **in that** the second return spring (40) acts upon the armature (11) counter to the lifting direction and in a position of rest, with the magnet coil (8) not excited, holds the armature (11) in bearing contact against the second stop (33) in such a way that the armature (11) is spaced apart by a predetermined spacing from the first stop (32) formed on the valve needle (13), the second stop (33) being formed on the connection part (16), and the connection part (16) consisting of a non-magnetic material.

3. Fuel injection valve according to Claim 1 or 2, **characterized in that** both an armature guide (57) and the second stop (33) are integrated in the connection part (16).

4. Fuel injection valve according to Claim 3,
**characterized in that** the armature (11) is configured in such a way that it cooperates both with an external pole (59) and with the armature guide (57) and the second stop (33).

5. Fuel injection valve according to Claim 1, **characterized in that** the magnetic throttle point (56) is arranged on the circumference of a portion of the armature (11), the said portion being oriented towards the valve needle (13).

6. Fuel injection valve according to one of Claims 1 to 5, **characterized in that** a sheathing (52) consisting of a non-magnetic material is arranged between the connection part (16) and an external pole (59).

## Revendications

1. Injecteur (1) pour des installations d'injection de carburant de moteurs à combustion interne, notamment pour l'injection directe de carburant dans la chambre de combustion d'un moteur à combustion interne, comprenant une bobine électromagnétique (8), un induit (11) sollicité par la bobine (8) dans une direction de déplacement contre un premier ressort de rappel (27), une aiguille d'injecteur (13) coopérant avec un organe d'obturation (14), cette aiguille ayant une première butée (32) pour l'induit (11),
l'induit (11) étant en outre sollicité par un second ressort de rappel (40) et il porte par une pièce de raccordement (16) le siège de soupape (15) coopérant avec l'organe d'obturation (14),
**caractérisé par**
une seconde butée fixe (33) pour l'induit (11),
le second ressort de rappel (40) sollicite l'induit (11) dans la direction opposée à la direction de déplacement et le maintient dans une position de repos contre la seconde butée (33) lorsque la bobine (8) n'est pas excitée de façon que l'induit (11) soit écarté de la première butée (32) formée par l'aiguille d'injecteur (13) d'une distance prédéterminée, l'induit (11) étant écarté de la première butée (32) réalisée sur l'aiguille d'injecteur (13) d'une distance prédéterminée,
la seconde butée (33) étant réalisée sur la pièce de raccordement (16) et cette pièce de raccordement (16) est en une matière magnétique et un point d'étranglement magnétique (56) est prévu au voisinage de la seconde butée (33) sur la pièce de raccordement (16) et/ou sur l'induit (11).

2. Injecteur (1) pour une installation d'injection de carburant d'un moteur à combustion interne, notamment pour l'injection directe de carburant dans la chambre de combustion d'un moteur à combustion interne, comprenant une bobine électromagnétique (8), un induit (11) sollicité par la bobine (8) dans une direction de déplacement contre le premier ressort de rappel (27),
une aiguille d'injecteur (13) coopérant avec un organe d'obturation (14), cette aiguille ayant une première butée (32) pour l'induit (11),
l'induit (11) étant en outre sollicité par un second ressort de rappel (40) et une pièce de raccordement (16) qui porte le siège de soupape (15) coopérant avec l'organe d'obturation (14),
**caractérisé par**
une seconde butée fixe (33) pour l'induit (11) et
le second ressort de rappel (40) sollicite l'induit (11) dans la direction opposée à la direction de déplacement et le maintient en appui contre la seconde butée (33), en position de repos, lorsque la bobine (8) n'est pas excitée, de façon que l'induit (11) soit écarté de la première butée (32) réalisée sur l'aiguille d'injecteur (13), d'une distance prédéterminée,
la seconde butée (33) étant réalisée sur la pièce de raccordement (16) et cette pièce (16) est en une matière non magnétique.

3. Injecteur selon la revendication 1 ou 2,
**caractérisé en ce qu'**
à la fois un moyen de guidage d'induit (57) et la seconde butée (33) sont intégrés à la pièce de raccordement (16).

4. Injecteur selon la revendication 3,
**caractérisé en ce que**
l'induit (11) est conçu pour coopérer à la fois avec un pôle extérieur (59) et avec le moyen de guidage d'induit (57) ainsi qu'avec la seconde butée (33).

5. Injecteur selon la revendication 1,
**caractérisé en ce que**
le point d'étranglement magnétique (56) est prévu à la périphérie d'un segment de l'induit (11) aligné vers l'aiguille (13).

6. Injecteur selon l'une des revendications 1 à 5,
**caractérisé par**
une enveloppe (52) en une matière non magnétique entre la pièce de raccordement (16) et un pôle extérieur (59).
